(19) Europäisches Patentamt
European Patent Office
Office européen des brevets

(11) **EP 4 730 785 A1**

(12) **EUROPEAN PATENT APPLICATION**

(43) Date of publication:
**22.04.2026 Bulletin 2026/17**

(21) Application number: **24306767.5**

(22) Date of filing: **21.10.2024**

(51) International Patent Classification (IPC):
**H04N 19/117** (2014.01)    **H04N 19/46** (2014.01)
**H04N 19/70** (2014.01)    **H04N 19/82** (2014.01)
**H04N 19/85** (2014.01)

(52) Cooperative Patent Classification (CPC):
**H04N 19/117; H04N 19/46; H04N 19/70;
H04N 19/82; H04N 19/85**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **DEMARTY, Claire-Helene
  35520 MONTREUIL LE GAST (FR)**
• **FRANCOIS, Edouard
  35890 BOURG DES COMPTES (FR)**
• **LE MEUR, Olivier
  35160 TALENSAC (FR)**
• **AUMONT, Franck
  35770 VERN SUR SEICHE (FR)**
• **BLONDE, Laurent
  35235 THORIGNE-FOUILLARD (FR)**
• **REINHARD, Erik
  35630 HEDE-BAZOUGES (FR)**

(74) Representative: **Vossius & Partner
Patentanwälte Rechtsanwälte mbB
Siebertstraße 3
81675 München (DE)**

(54) **SELECTING TONE MAPPING METADATA**

(57) Video coding may be performed by selecting tone mapping metadata. For example, a device may receive a bitstream. The device may determine a first metadata from the bitstream. The first metadata may indicate a first change to one or more image pixel values from the bitstream. The device may determine a second metadata from the bitstream. The second metadata may indicate a second change to the one or more image pixel values. The second metadata may indicate neural network post filter characteristics (NNPFC). The device may select the second change based on the indication of the NNPFC, for example, if it is determined that the first change conflicts with the second change. The device may decode an image by applying the selected second change to the one or more image pixel values.

FIG. 4

EP 4 730 785 A1

**Description**

**BACKGROUND**

The present application is related to video coding systems that may be used to compress digital video signals, e.g., to reduce the storage and/or transmission bandwidth needed for such signals. Video coding systems may include, for example, block-based, wavelet-based, and/or object-based systems.

**BRIEF SUMMARY**

Systems, methods, and instrumentalities are disclosed for performing video coding (e.g., encoding and/or decoding) by selecting tone mapping metadata.

In examples, a device (e.g., a decoder for video decoding) may receive a bitstream. The device may determine a first metadata from the bitstream. The first metadata may be associated with a first supplemental enhanced information (SEI) message. The first metadata may indicate a first change to one or more image pixel values from the bitstream. The device may determine a second metadata from the bitstream. The second metadata may be associated with a second SEI message. The second metadata may indicate a second change to the one or more image pixel values. The second metadata may indicate neural network post filter characteristics (NNPFC). The device may select the second change based on the indication of the NNPFC, for example, if it is determined that the first change conflicts with the second change. The device may decode an image by applying the selected second change to the one or more image pixel values.

In examples, a device (e.g., a decoder for video encoding) may receive an image. The device may determine a metadata from the bitstream. The metadata may indicate a first change to one or more image pixel values from the bitstream. The metadata may indicate a second change to one or more image pixel values from the bitstream. The metadata may be associated with an SEI message. The metadata may indicate a NNPFC. The device may select the second change based on the indication of the NNPFC if it is determined that the first change conflicts with the second change. The device may decode an image by applying the selected second change to the one or more image pixel values.

In examples, a device (e.g., an encoder for video encoding) may receive an image. The device may determine a first metadata for the bitstream. The first metadata may be associated with a first supplemental enhanced information (SEI) message. The first metadata may indicate a first change to one or more image pixel values of the image. The device may determine a second metadata for the bitstream. The second metadata may be associated with a second SEI message. The second metadata may indicate a second change to the one or more image pixel values. The second metadata may indicate neural network post filter characteristics (NNPFC). The second device may select the second change based on the indication of the NNPFC, for example, if it is determined that the first change conflicts with the second change. The device may encode the bitstream by using at least one of the first SEI message or the second SEI message.

**BRIEF DESCRIPTION OF THE DRAWINGS**

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.

FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 illustrates an example of keeping and applying a neural network post filter characteristics (NNPFC) supplemental enhanced information (SEI) for tone mapping.
FIG. 5 illustrates an example of keeping and applying the NNPFC SEI for tone mapping and another metadata.
FIG. 6 illustrates an example of discarding the NNPFC SEI for tone mapping.

**DETAILED DESCRIPTION**

In describing the various embodiments of the present disclosure, certain terminology is used herein for convenience only and should not be considered as limiting such embodiments. In the drawings, the same reference numerals are employed for designating the same elements throughout the several figures and the present description.

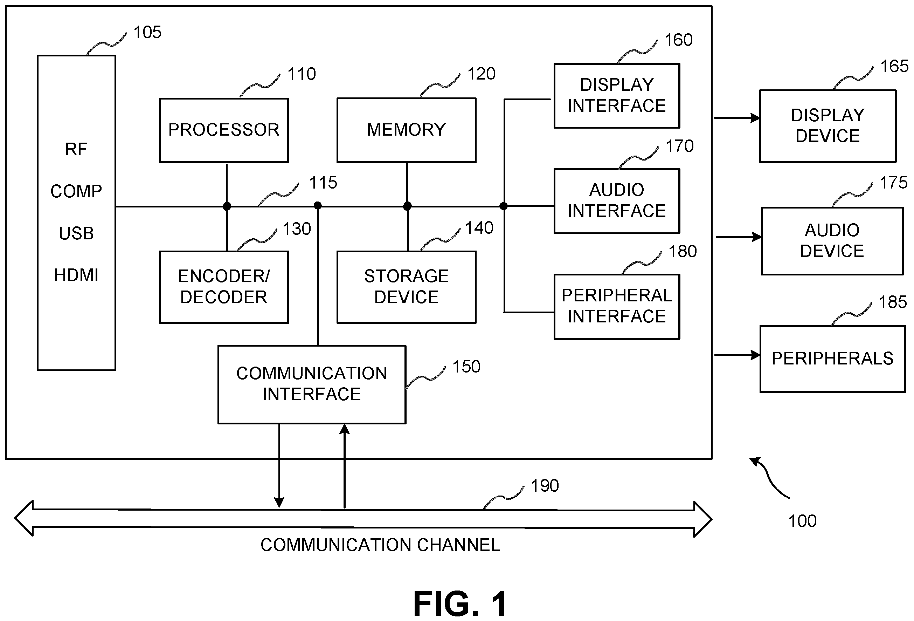

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

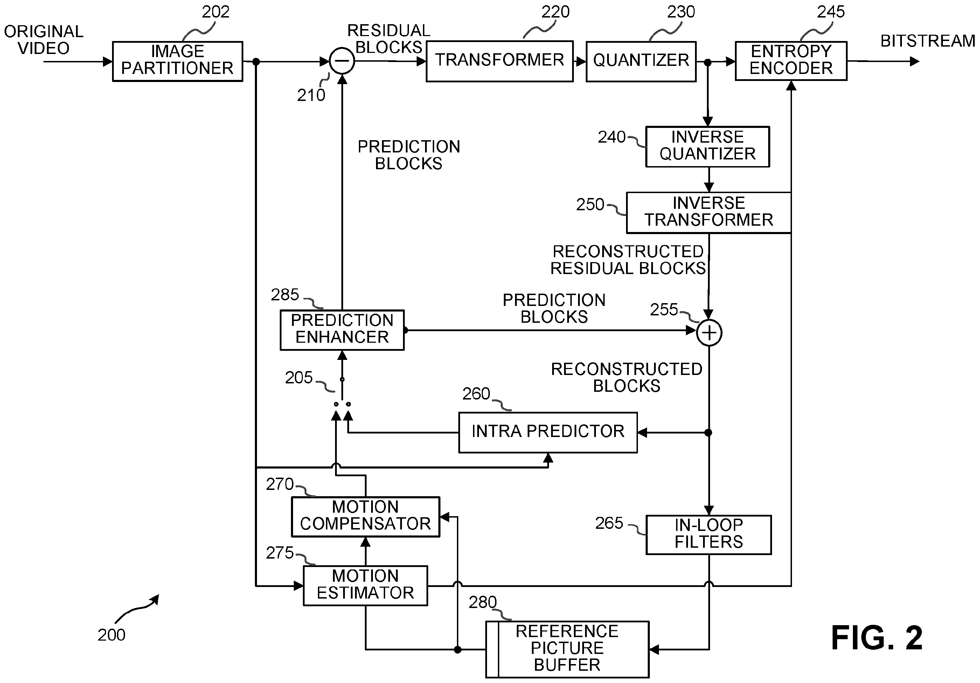

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (WC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

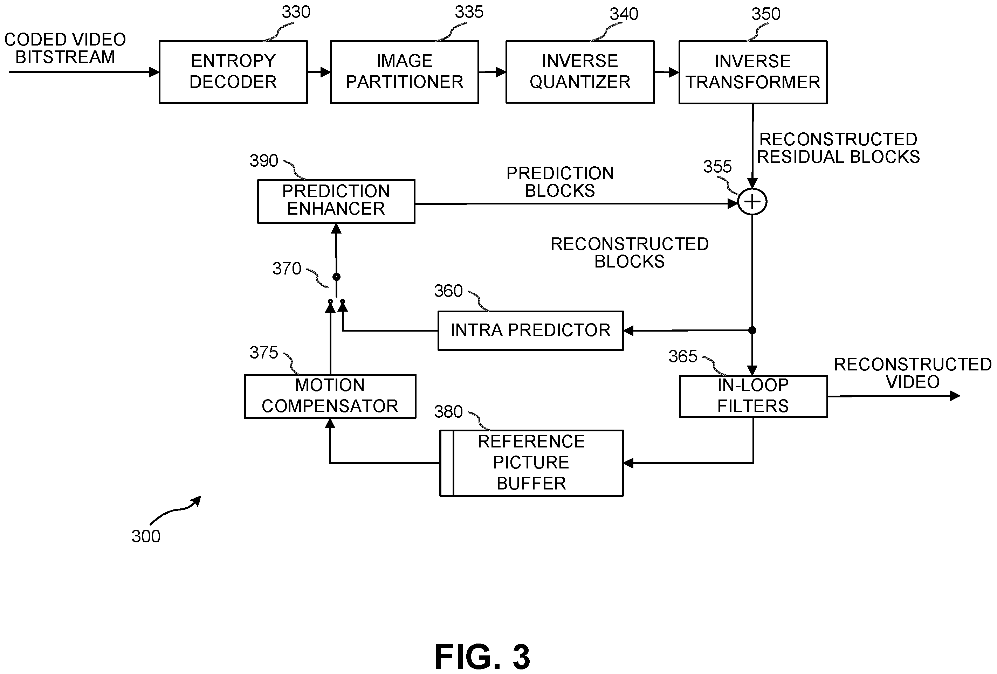

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, $U$ and $V$ (also denoted herein by $C$, $Cb$, $Cr$).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340, and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Systems, methods, and instrumentalities are disclosed for performing video coding (e.g., encoding and/or decoding) by selecting tone mapping metadata.

In examples, a device (e.g., a decoder for video decoding) may receive a bitstream. The device may determine a first metadata from the bitstream. The first metadata may be associated with a first supplemental enhanced information (SEI) message. The first metadata may indicate a first change to one or more image pixel values from the bitstream. The device may determine a second metadata from the bitstream. The second metadata may be associated with a second SEI message. The second metadata may indicate a second change to the one or more image pixel values. The second metadata may indicate neural network post filter characteristics (NNPFC). The device may select the second change based on the indication of the NNPFC, for example, if it is determined that the first change conflicts with the second change. The device may decode an image by applying the selected second change to the one or more image pixel values.

In examples, a device (e.g., a decoder for video encoding) may receive an image. The device may determine a metadata from the bitstream. The metadata may indicate a first change to one or more image pixel values from the bitstream. The metadata may indicate a second change to one or more image pixel values from the bitstream. The metadata may be associated with an SEI message. The metadata may indicate a NNPFC. The device may select the second change based on the indication of the NNPFC if it is determined that the first change conflicts with the second change. The device may decode an image by applying the selected second change to the one or more image pixel values.

In examples, a device (e.g., an encoder for video encoding) may receive an image. The device may determine a first metadata for the bitstream. The first metadata may be associated with a first supplemental enhanced information (SEI) message. The first metadata may indicate a first change to one or more image pixel values of the image. The device may determine a second metadata for the bitstream. The second metadata may be associated with a second SEI message. The second metadata may indicate a second change to the one or more image pixel values. The second metadata may indicate neural network post filter characteristics (NNPFC). The second device may select the second change based on the indication of the NNPFC, for example, if it is determined that the first change conflicts with the second change. The device may encode the bitstream by using at least one of the first SEI message or the second SEI message.

Some images may be transformed by processing or adapting, for example, one or more of the following: colors, brightness, luminance, contrast values, and/or bit depth. Tone Mapping operations are examples of transformations. A transformation may respond to different (e.g., specific) purposes. Examples of purposes may be tone mapping or energy reduction of the video chain.

Selection of metadata (e.g., for the purpose of tone mapping) may be used in the field of video compression. For example, metadata selection may be used to avoid the application (e.g., to a same picture or set of pictures) of transformations and their associated metadata that are similar or close or potentially conflicting.

A neural network post filter (NNPF) may be used for tone mapping. Versatile supplemental enhancement information (VSEI) may include one or more types of supplemental enhancement information (SEI) messages, such as an NNPF Characteristics (NNPFC) SEI message. An NNPFC SEI message may embed metadata associated with a neural network post-filter (NNPF) that may be applied to one or more

(e.g., several) pictures, e.g., after a video decoding process. An NNPFC SEI message may include a syntax element, for example, to indicate the purpose of the post-filter, such as visual quality improvement, chroma upsampling, resolution resampling, etc.

Tone Mapping operations may include the example of syntax and semantics shown in Table 1. The use of a tone mapping NNPF may modify the color(s), luminance, brightness, bit depth, etc. of the input image.

Table 1 - Example of tone mapping operations syntax and semantics

| bitMask | Interpretation |
|---|---|
| 0x01 | General visual quality improvement |
| 0x02 | Chroma upsampling (e.g., from the 4:2:0 chroma format to the 4:2:2 or 4:4:4 chroma format, or from the 4:2:2 chroma format to the 4:4:4 chroma format) |
| 0x04 | Resolution resampling (e.g., increasing or decreasing the width or height) |
| 0x08 | Picture rate upsampling |
| 0x10 | Bit depth upsampling (e.g., increasing the luma bit depth or the chroma bit depth) |
| 0x20 | Colourization |
| 0x40 | Temporal extrapolation (e.g.. generating one or more future pictures) |
| 0x80 | Spatial extrapolation (e.g., generating content outside of the spatial area of the input pictures) |
| 0x100 | Tone mapping (e.g., modification of the color values, in terms of contrast, color, saturation, luminance, etc.). |

Table 1 shows an example list of NNPFC purposes. In various examples, purposes may be added, removed, changed, etc. The bitMask value is given as an example. Other bitmask values may be used. In some examples, the value of nnpfc_purpose may be in the range of 0 to 511, inclusive, in some bitstreams. Values of 512 to 65,535, inclusive, for nnpfc_purpose may represent other purposes.

An example of SEI message syntax is provided in Table 2.

Table 2 - Example of SEI message syntax

| nn_post_filter_characteristics( payloadSize ) { | Descriptor |
|---|---|
| nnpfc_purpose | u(16) |
| nnpfc_id | ue(v) |
| nnpfc_base_flag | u(1) |
| nnpfc_mode_idc | ue(v) |
| if( nnpfc_mode_idc == 1 ) { | |
| while( !byte_aligned( ) ) | |
| nnpfc_alignment_zero_bit_a | u(1) |
| nnpfc_tag_uri | st(v) |
| nnpfc_uri | st(v) |
| } | |
| nnpfc_property_present_flag | u(1) |
| if( nnpfc_property_present_flag ) { | |
| /* input and output formatting */ | |

(continued)

| | |
|---|---|
| **nnpfc_num_input_pics_minus1** | ue(v) |
| if( nnpfc_num_input_pics_minus1 > 0) { | |
| for( i = 0; i <= nnpfc_num_input_pics_minus1; i++) | |
| **nnpfc_input_pic_filtering_flag[ i ]** | u(1) |
| **nnpfc_absent_input_pic_zero_flag** | u(1) |
| } | |
| if( ChromaUpsamplingFlag ) | |
| **nnpfc_out_sub_c_flag** | u(1) |
| if( ColourizationFlag ) | |
| **nnpfc_out_colour_format_idc** | u(2) |
| if( ResolutionResamplingFlag) { | |
| **nnpfc_pic_width_num_minus1** | ue(v) |
| **nnpfc_pic_width_denom_minus1** | ue(v) |
| **nnpfc_pic_height_num_minus1** | ue(v) |
| **nnpfc_pic_height_denom_minus1** | ue(v) |
| } | |
| if(ToneMappingFlag) { | |
| **nnpfc_tone_mapping_purpose** | u(8) |
| if( **nnpfc_tone_mapping_purpose == 0** ){ | |
| nnpfc_ratio_value | u(8) |
| nnpfc_ratio_sign_flag | u(1) |
| nnpfc_quality_metric | u(3) |
| nnpfc_expected_quality | u(8) |
| nnpfc_display_model | u(4) |
| } | |
| } | |
| if( PictureRateUpsamplingFlag) | |
| for( i = 0; i < nnpfc_numjnput_pics_minus1; i++) | |
| **nnpfc_interpolated_pics[ i ]** | ue(v) |
| **nnpfc_componen_last_flag** | u(1) |
| **nnpfc_inp_format_idc** | ue(v) |
| **nnpfc_auxiliary_inp_idc** | ue(v) |
| **nnpfc_inp_order_idc** | ue(v) |
| if( nnpfc_inp_format_idc = = 1 ) { | |
| if( nnpfc_inp_order_idc != 1 ) | |
| **nnpfc_inp_tensor_luma_bitdepth_minus8** | ue(v) |
| if( nnpfc_inp_order_idc > 0) | |
| **nnpfc_inp_tensor_chroma_bitdepth_minus8** | ue(v) |
| } | |
| **nnpfc_out_format_idc** | ue(v) |

(continued)

| | |
|---|---|
| **nnpfc_out_order_idc** | ue(v) |
| if( nnpfc_out_format_idc = = 1 ) { | |
| if( nnpfc_out_order_idc != 1 ) | |
| **nnpfc_out_tensor_luma_bitdepth_minus8** | ue(v) |
| if( nnpfc_out_order_idc != 0) | |
| **nnpfc_out_tensor_chroma_bitdepth_minus8** | ue(v) |
| } | |
| **nnpfc_separate_colour_description_present_flag** | u(1) |
| if( nnpfc_separate_colour_description_present_flag) { | |
| **nnpfc_colour_primaries** | u(8) |
| **nnpfc_transfer_characteristics** | u(8) |
| if( nnpfc_out_format_idc = = 1 ) { | |
| **nnpfc_matrix_coeffs** | u(8) |
| **nnpfc_full_range_flag** | u(1) |
| } | |
| } | |
| if( nnpfc_out_order_idc > 0) | |
| **nnpfc_chroma_loc_info_present_flag** | u(1) |
| if( nnpfc_chroma_loc_info_present_flag ) | |
| **nnpfc_chroma_sample_loc_type_frame** | ue(v) |
| **nnpfc_overlap** | ue(v) |
| **nnpfc_constant_patch_size_flag** | u(1) |
| if( nnpfc_constant_patch_size_flag ) { | |
| **nnpfc_patch_width_minus1** | ue(v) |
| **nnpfc_patch_height_minus1** | ue(v) |
| } else { | |
| **nnpfc_extended_patch_width_cd_delta_minus1** | ue(v) |
| **nnpfc_extended_patch_height_cd_delta_minus1** | ue(v) |
| } | |
| **nnpfc_padding_type** | ue(v) |
| if( nnpfc_padding_type = = 4) { | |
| if( nnpfc_inp_order_idc != 1) | |
| **nnpfc_luma_padding_val** | ue(v) |
| if( nnpfc_inp_order_idc != 0) { | |
| **nnpfc_cb_padding_val** | ue(v) |
| **nnpfc_cr_padding_val** | ue(v) |
| } | |
| } | |
| **nnpfc_complexity_info_present_flag** | u(1) |
| if( nnpfc_complexity_info_present_flag ) { | |

(continued)

| | |
|---|---|
| **nnpfc_parameter_type_idc** | u(2) |
| if( nnpfc_parameter_type_idc != 2) | |
| **nnpfc_log2_parameter_bit_length_minus3** | u(2) |
| **nnpfc_num_parameters_idc** | u(6) |
| **nnpfc_num_kmac_operations_idc** | ue(v) |
| **nnpfc_total_kilobyte_size** | ue(v) |
| } | |
| **nnpfc_num_metadata_extension_bits** | ue(v) |
| if( nnpfc_num_metadata_extension_bits > 0 ) | |
| **nnpfc_reserved_metadata_extension** | u(v) |
| } | |
| /* ISO/IEC 15938-17 bitstream */ | |
| if( nnpfc_mode_idc = = 0 ) { | |
| while( !byte_aligned( ) ) | |
| **nnpfc_alignment_zero_bit_b** | u(1) |
| for( i = 0; more_data_in_payload( ); i++) | |
| **nnpfc_payload_byte[ i ]** | b(8) |
| } | |
| } | |

One or more variables (e.g., ChromaUpsamplingFlag, ResolutionResamplingFlag, PictureRateUpsamplingFlag, BitDepthUpsamplingFlag, ColourizationFlag, Temporal Extrapolation Flag, SpatialExtrapolationFlag, and/or ToneMappingFlag) may specify whether nnpfc_purpose indicates one or more purposes of the NNPF (e.g., chroma upsampling, resolution resampling, picture rate upsampling, bit depth upsampling, colourization, temporal extrapolation, and/or tone mapping respectively). The variables may be derived, for example, as shown by the set of equations identified as Eq. (1):

$$ChromaUpsamplingFlag = ( ( nnpfc\_purpose \ \& \ 0x02 ) > 0 ) ? 1 : 0$$
$$ResolutionResamplingFlag = ( ( nnpfc\_purpose \ \& \ 0x04 ) > 0 ) ? 1 : 0$$
$$PictureRateUpsamplingFlag = ( ( nnpfc\_purpose \ \& \ 0x08 ) > 0 ) ? 1 : 0 \qquad (1)$$
$$BitDepthUpsamplingFlag = ( ( nnpfc\_purpose \ \& \ 0x10 ) > 0 ) ? 1 : 0$$
$$ColourizationFlag = ( ( nnpfc\_purpose \ \& \ 0x20 ) > 0 ) ? 1 : 0$$
$$TemporalExtrapolationFlag = ( ( nnpfc\_purpose \ \& \ 0x40 ) > 0 ) ? 1 : 0$$
$$SpatialExtrapolationFlag = ( ( nnpfc\_purpose \ \& \ 0x80 ) > 0 ) ? 1 : 0$$
$$ToneMappingFlag = ( ( nnpfc\_purpose \ \& \ 0x100 ) > 0 ) ? 1 : 0$$

A nnpfc_tone_mapping_purpose may indicate a sub-purpose of a tone mapping operation, e.g., as specified by example in Table 3. An (nnpfc_tone_mapping_purpose & bitmask) not equal to zero (0) may indicate the NNPF of purpose Tone Mapping has the sub-purpose, which may be associated with a bitMask value, e.g., shown by example in Table 3.

The value of the nnpfc_tone_mapping_purpose may be zero (0), for example, in some bitstreams. Values of 1 to 65535, inclusive, for nnpfc_tone_mapping_purpose may represent other uses.

Table 3 - Example indication of a sub-purpose of a tone mapping operation

| Bitmask | Interpretation |
|---|---|
| 0x01 | Brightness adaptation |

The variable TM_BrightnessAdaptationFlag (e.g., which may specify whether nnpfc_tone_mapping_purpose indicates that a sub purpose of the Tone Mapping NNPF includes a brightness adaptation) may be derived, for example, in accordance with Eq. (2):

$$\text{TM\_BrightnessAdaptationFlag} = ( ( \text{nnpfc\_tone\_mapping\_purpose} \ \& \ 0x01 ) > 0 ) \ ? \ 1 : 0 \qquad (2)$$

Parameter nnpfc_ratio_value may specify, for example, if/when ToneMappingFlag is equal to 1 and TM_BrightnessAdaptationFlag is equal to 1, the amount of brightness adaptation through brightness decrease or increase (e.g., accordingly with the value of the nnpfc_ratio_sign_flag field) that the Tone Mapping post-filter may achieve. In some examples, nnpfc_ratio_value may be coded over 8 bits.

Parameter nnpfc_ratio_sign_flag may specify if the value of nnpfc_ratio_value may be considered as negative or positive. The use of the NNPF may result in an increase of content brightness, for example, if nnpfc_ratio_sgn_flag equals zero (0). The use of the NNPF may result in a decrease in terms of content brightness, for example, if nnpfc_ratio_sgn_flag equals one (1).

Parameter nnpfc_expected_quality may specify the quality of the displayed video, e.g., after applying the tone mapping neural network post filter for brightness adaptation. Examples of metrics may be, for example, peak signal-to-noise ratio (PSNR), Video Multi-method Assessment Fusion (V-MAF) or structural similarity index measure (SSIM) values for the modified picture, for example, after applying the neural network post filter, e.g., as specified by example in Table 4. The nnpfc_expected_quality parameter may be expressed, for example, as an absolute value or as a percentage value of reduction of quality, e.g., according to a selected quality metric in comparison with a nominal value.

Parameter nnpfc_video_quality_metric may indicate the quality metric to be considered, for example, if/when considering the loss of quality when performing the balancing between the quality reduction and the brightness adaptation. An example interpretation of the nnpfc_video_quality_metric_field is shown in Table 4.

Table 4 - Example interpretation of the nnpfc_video_quality_metric_field for video quality metrics

| nnpfc_video_quality_metric field value | Metric name |
|---|---|
| 0x00 | PSNR |
| 0x01 | SSIM |
| 0x02 | wPSNR |
| 0x03 | WS-PSNR |
| 0x04 | V-MAF |
| 0x05..0x07 | Reserved for future metrics |

nnpfc_display_model may be a bit field mask, which may indicate the display models on which the tone mapping neural network post filter for brightness adaptation may be used. An example interpretation of the bits of nnpfc_display_model is shown in Table 5.

Table 5 - Example interpretation of the bits of nnpfc_display_model

| Bit number | Display model |
|---|---|
| 0 | Transmissive pixel |
| 1 | Emissive pixel |
| 2..3 | Reserved for future types |

For example, nnpfc_display_type_field=$11_2$ may indicate that the NNPF can be used for both transmissive pixel and emissive pixel display models.

In some examples, other NNPF purposes may (e.g., also) target the modifications of the image brightness, luminance, colors values, etc.

As previously indicated, Table 1 shows an example list of NNPF purposes that may be (e.g., defined) in an NNPFC SEI message. Among the purposes shown in Table 1, the General Visual Quality Improvements, Colourization, and/or Bit Depth Upsampling purposes may transform the image colors, luminance, brightness, contrast, bit depth, and/or other characteristics of an input image, which may result in modification of the pixel values of the input image.

Other metadata related to tone mapping post-filtering may also defined/used, for example, such as one or more of the following: Color Remapping Information (CRI) SEI message; Color Transform Information (CTI) SEI message; single layer high dynamic range (SL-HDR) metadata; and/or DolbyVision metadata.

A Colour Remapping Information (CRI) SEI message may include, for example, one or more (e.g., three (3)) mapping pre-look-up-tables (LUTs), one or more matrices (e.g., a 3x3 matrix), and/or one or more (e.g., three (3)) mapping post-look-up-tables (LUTs). The input image may include one or more components, e.g., three (3) colour component (e.g., R,G,B) arrays. For each (R,G,B) sample, each colour component may be mapped, e.g., using its pre-LUT. The output mapped components may be processed, for example, by the (3x3) matrix. The output vector of (e.g., three (3)) samples may (e.g., then) be mapped, e.g., using the post-LUTs.

A Colour Transform Information (CTI) SEI message may be a variant of the CRI SEI message (e.g., where there may be (only three (3)) mapping LUTs), which may be applied to the input samples, for example, independently for each colour component, or with an inter-dependency (e.g., the mapping of a component may be a scaling with a scale value depending on the value of the other component).

SL-HDR metadata may (e.g., also) define parameters specifying a mapping function. SL-HDR metadata may (e.g., also) integrate colour transform metadata.

DolbyVision metadata is another type of tone mapping metadata.

SL-HDR metadata may be provided, for example, in an SL-HDR Information SEI message, such as, for example, an HEVC SEI message, e.g., as shown by example in Table 6. An SL-HDR Information SEI message may carry information related to the conversion from SDR to HDR of (e.g., some) input pictures. An SDR to HDR transformation may imply one or more changes, e.g., potential changes in color, luminance, brightness values of the input pictures, which may be similar to the NNPFC SEI message with purpose Tone Mapping. Table 6 shows an example of sl_hdr_info SEI message syntax.

Table 6 - example of sl_hdr_info SEI message syntax

| Syntax | Descriptor |
|---|---|
| sl_hdr_info( payloadSize ) { | |
|     **itu_t_t35_country_code** | b(8) |
|     **terminal_provider_code** | u(16) |
|     **terminal_provider_oriented_code_message_idc** | u(8) |
|     **sl_hdr_mode_value_minus1** | u(4) |
|     **sl_hdr_spec_major_version_idc** | u(4) |
|     **sl_hdr_spec_minor_version_idc** | u(7) |
|     **sl_hdr_cancel_flag** | u(1) |
|     if( !sl_hdr_cancel_flag ) { | |
|         **sl_hdr_persistence_flag** | u(1) |
|         **original_picture_info_present_flag** | u(1) |
|         **target_picture_info_present_flag** | u(1) |
|         **src_mdcv_info_present_flag** | u(1) |
|         **sl_hdr_extension_present_flag** | u(1) |
|         **sl_hdr_payload_mode** | u(3) |
|         if(original_picture_info_present_flag) { | |
|             **original_picture_primaries** | u(8) |
|             **original_picture_max_luminance** | u(16) |
|             **original_picture_min_luminance** | u(16) |
|         } | |
|         if( target_picture_info_present flag_) f | |
|             **target_picture_primaries** | u(8) |
|             **target_picture_max_luminance** | u(16) |
|             **target_picture_min_luminance** | u(16) |

(continued)

| Syntax | Descriptor |
|---|---|
| } | |
| if( src_mdcv_info_present_flag ) { | |
| for( c = 0; c < 3; c++ ) { | |
| **src_mdcv_primaries_x**[ c ] | u(16) |
| **src_mdcv_primaries_y**[ c ] | u(16) |
| } | |
| **src_mdcv_ref_white_x** | u(16) |
| **src_mdcv_ref_white_y** | u(16) |
| **src_mdcv_max_mastering_luminance** | u(16) |
| **src_mdcv_min_mastering_luminance** | u(16) |
| } | |
| for( i = 0; i < 4; i++) | |
| **matrix_coefficient_value**[ i ] | u(16) |
| for( i = 0; i < 2; i++) | |
| **chroma_to_luma_injection[ i ]** | u(16) |
| for( i = 0; i < 3; i++) | |
| **k_coefficient_value[ i ]** | u(8) |
| if( sl_hdr_payload_mode = = 0 ) { | |
| **tone_mapping_input_signal_black_level_offset** | u(8) |
| **tone_mappinp_input_signal_white_level_offset** | u(8) |
| **shadow_gain_control** | u(8) |
| **highlight_gain_control** | u(8) |
| **mid_tone_width_adjustment_factor** | u(8) |
| **tone_mapping_output_fine_tuning_num_val** | u(4) |
| **saturation_gain_num_val** | u(4) |
| for( i = 0; i < tone_mapping_output_fine_tuning_num_val; i++) { | |
| **tone_mapping_output_fine_tuning_x**[ i ] | u(8) |
| **tone_mapping_output_fine_tuning_y**[ i ] | u(8) |
| } | |
| for( i = 0; i < saturation_gain_num_val; i++) { | |
| **saturation_gain_x**[ i ] | u(8) |
| **saturation_gain_y**[ i ] | u(8) |
| } | |
| } | |
| else if( sl_hdr_payload_mode = = 1 ) { | |
| **lm_uniform_sampling_flag** | u(1) |
| **luminance_mapping_num_val** | u(7) |
| for( i = 0; i < luminance_mapping_num_val; i++) { | |
| if( !lm_uniform_sampling_flag) | |

(continued)

| Syntax | Descriptor |
|---|---|
| **luminance_mapping_x**[ i ] | u(16) |
| **luminance_mapping_y**[ i ] | u(16) |
| } | |
| **cc_uniform_sampling_flag** | u(1) |
| **colour_correction_num_val** | u(7) |
| for( i = 0; i < colour_correction_num_val; i++) { | |
| if( !cc_uniform_sampling_flag ) | |
| **colour_correction_x**[ i ] | u(16) |
| **colour_correction_y**[ i ] | u(16) |
| } | |
| } | |
| if( GamutMappingEnabledFlag ) { | |
| **gamut_mapping_mode** | u(8) |
| if (gamut_mapping_mode = = 1) | |
| gamut_mapping_params( ) | |
| } | |
| if( sl_hdr_extension_present_flag ) { | |
| **sl_hdr_extension_6bits** | u(6) |
| **sl_hdr_extension_length** | u(10) |
| for( i = 0; i < sl_hdr_extension_lenqth; i++) | |
| **sl_hdr_extension_data_byte**[ i ] | u(8) |
| } | |
| } | |
| } | |

An SL-HDR Information SEI message may provide information to identify, for example, one or more of the following: the specification version number, the characteristics of the source, decomposed and reconstructed signals, the payload mode, and/or the dynamic metadata that may be used by the SL-HDR systems.

With reference to example syntax in Table 6, itu_t_t35_country_code equal to 0b10110101 (0xB5) may designate, for example, the United States of America.
terminal_provider_code may include, for example, an identifying number that may be provided by an administration or a national body to register the SEI message. The most significant byte of terminal_provider_code may be equal to, for example, 0b00000000 (0x00). The least significant byte of terminal_provider code may be equal to, for example, 0b00111010 (0x3A)

terminal_provider oriented code message idc may include an identifying number to indicate the SEI message type. terminal_provider oriented code message idc may be equal to, for example, 0b00000000 (0x00).

sl_hdr_mode_value_minus1 plus 1 may specify a part that the SL-HDR Information SEI message payload may apply to. The value of sl_hdr_mode_value_minus1 may be in the range of, for example, zero (0) to two (2), inclusive. The value of sl_hdr_mode_value_minus1 may be equal to zero (0), for example, in some bitstreams.

sl_hdr_spec_major_version_idc may include an identifying number that may be used to identify the specification version number to which the associated bitstream conforms to. The value of sl_hdr_spec_major_version_idc may be in the range of, for example, zero (0) to 15, inclusive. The value of sl_hdr_spec_major_version_idc may be equal to one (1), for example, in some bitstreams.

sl_hdr spec minor version_idc may include an identifying number that may be used to identify the specification version number to which the associated bitstream conforms to. The value of sl_hdr_spec_minor_version_idc may be in the range of, for example, zero (0) to 127, inclusive. The value of sl_hdr spec minor version idc may be equal to one (1), for example, in some bitstreams.

sl_hdr_cancel_flag equal to one (1) may indicate, for example, that the SL-HDR Information SEI message cancels the persistence of a (e.g., any) previous SL-HDR Information SEI message in output order with the same value of sl_hdr_mode_value_minus1 that may apply to the current layer.

sl_hdr_cancel_flag equal to zero (0) may indicate, for example, that SL-HDR Information follows.

sl_hdr_persistence_flag may specify the persistence of the SL-HDR Information SEI message for the current layer. sl_hdr_persistence_flag equal to zero (0) may specify that the SL-HDR Information may apply (e.g., only) to the current picture.

For purposes of describing an example, let picA be the current picture. sl_hdr_persistence_flag equal to one (1) may specify that the SL-HDR Information persists for the current layer in output order until one or more of the following conditions is true: a new CLVS of the current layer begins; the bitstream ends; and/or a picture picB in the current layer in an access unit including an SL-HDR Information SEI message with the same value of sl_hdr_mode_value_minus1 and applicable to the current layer is output for which PicOrderCnt( picB ) is greater than PicOrderCnt( picA ), where PicOrderCnt( picB ) and PicOrderCnt( picA) may be the PicOrderCntVal values of picB and picA, respectively, for example, (e.g., immediately) after the invocation of the decoding process for picture order count for picB.

original_picture info_present_flag equal to one (1) may specify, for example, that original_picture_primaries, original_picture_max_luminance, and original_picture min luminance are present. original_picture_info_present flag equal to zero (0) may specify, for example, that original_picture_primaries, original_picture max luminance, and original_picture min luminance are not present. original_picture info_present_flag value may be equal to zero (0), for example, in some bitstreams.

original_picture info_present_flag and associated syntax elements may provide information on the original picture that was graded on the HDR mastering display during the post-production stage. The information may be useful in case the source picture that is coded in the bitstream has different characteristics than the original picture (e.g., the maximum luminance information).

target_picture_info_present_flag equal to one (1) may specify, for example, that target_picture_primaries, target_picture max luminance, and target_picture min luminance are present. target_picture info_present flag equal to zero (0) may specify, for example, that target_picture_primaries, target_picture_max_luminance, and target_picture_min_luminance are not present.

target_picture info_present flag and associated syntax elements may provide information on the SDR picture that was graded on the SDR mastering display during the post-production stage.

src mdcv_info_present flag equal to one (1) may specify, for example, that src_mdcv_primaries_x[ c ], src_mdcv_primaries_y[ c ], src_mdcv_ref_white_x, src_mdcv_ref_white_y, src mdcv_max mastering luminance, and src mdcv_min mastering luminance are present. src mdcv_info_present flag equal to zero (0) may specify, for example, that src_mdcv_primaries_x[ c ], src_mdcv_primaries_y[ c ], src_mdcv_ref_white_x, src_mdcv_ref_white_y, src mdcv_max mastering luminance, and src mdcv_min mastering luminance are not present.

Providing src mdcv_info_present flag and the associated syntax elements in the bitstream may assist SL-HDR decoding systems to (e.g., properly) interpret the colour volume of the source picture, for example, if/when a Mastering Display Colour Volume SEI message may be used by a bitstream that was not generated by SL-HDR encoding systems. The src mdcv_info_present flag may be set equal to one (1), for example, so that SL-HDR information may be (e.g., fully) included in the SL-HDR Information SEI message.

SL-HDR decoding systems may use the value of the syntax elements enabled by src mdcv_info_present flag during the reconstruction process, for example, if/when a Mastering Display Colour Volume SEI message and an SL-HDR Information SEI message with src mdcv_info_present flag equal to one (1) are present in the same CLVS.

src mdcv_info_present flag may be equal to one (1), for example, if/when an MDCV SEI message is not present with an SL-HDR Information SEI message in the same CLVS.

An MDCV SEI message may be present in the CLVS, for example, if/when src mdcv_info_present flag is equal to zero (0).

sl_hdr extension_present flag equal to one (1) may specify, for example, that sl_hdr extension 6bits, sl_hdr extension length, and sl_hdr_extension_data_byte[ i ] are present. sl_hdr extension_present flag equal to zero (0) may specify, for example, that sl_hdr_extension_6bits, sl_hdr_extension_length, and sl_hdr_extension_data_byte[ i ] are not present. sl hdr extension_present flag may be equal to zero (0), for example, in some bitstreams.

sl_hdr_payload_mode may include an identifying number that may be used to identify the payload mode to which the associated bitstream conforms to. The value of sl_hdr_payload_mode may be in the range of, for example, zero (0) to one (1), inclusive.

A parameter-based mode may be indicated, for example, by sl_hdr_payload_mode value equal to zero (0). A table-based mode may be indicated, for example, by sl_hdr_payload_mode value equal to one (1).

original_picture_primaries may have the same semantics as may be specified for the colour_primaries syntax element. The value of original_picture_primaries may be equal to one (1) (e.g., Rec. 709 primaries), nine (9) (e.g., Rec. 2020 primaries), or 12 (e.g., P3D65). original_picture_primaries may indicate the colour primaries of the mastering display for the original picture. Some decoders may ignore the value of original_picture_primaries.

original_picture_max_luminance may have the same semantics as may be specified for the max_display_mastering_luminance syntax element, e.g., except that the value of original_picture_max_luminance may be coded in units of one (1) candela per square meter. original_picture_max_luminance may apply to the original picture. Some decoders may ignore the value of original_picture_max_luminance.

original_picture min luminance may have the same semantics as may be specified for the min_display_mastering_luminance syntax element. For example, the value may be coded in units of 0.0001 candelas per square meter. original_picture_min_luminance may apply to the original picture. Some decoders may ignore the value of original_picture_min_luminance.

target_picture_primaries may have the same semantics as may be specified for the colour_primaries syntax element, e.g., except that target_picture_primaries may identify the colour space of the target picture rather than the colour space that may be used for the CLVS. The value of target_picture_primaries may be equal to one (1) (e.g., Rec. 709 primaries) or nine (9) (e.g., Rec. 2020 primaries).

target_picture_max_luminance may have the same semantics as may be specified for the max_display_mastering_luminance syntax element, e.g., except that the value may be coded in units of one (1) candela per square meter. target_picture_max_luminance may apply to the target picture. target_picture_max_luminance (e.g., if/when not present) may be inferred to be equal to, for example, 100. In some bitstreams, target_picture_max_luminance value may be equal to 100.

target_picture_min_luminance may have the same semantics as may be specified for the min display_mastering luminance syntax element. For example, the value may be coded in units of 0.0001 candelas per square meter. target_picture_min_luminance may apply to the target picture. target_picture_min_luminance (e.g., if/when not present) may be inferred to be equal to, for example, zero (0). In some bitstreams, target_picture min luminance value may be equal to zero (0).

src_mdcv_primaries_x[ i ] and src_mdcv_primaries_y[ i ] may have the same semantics as may be specified for the display_primaries_x[ c ] and display_primaries_y[ c ] syntax elements. For example, the value may be coded in normalized increments of 0.00002, e.g., according to an example color space definition of x and y. src_mdcv_primaries_x [ i ] and src_mdcv_primaries_y[ i ] may apply to the associated source picture.

src_mdcv_ref_white_x and src_mdcv_ref_white_y may have the same semantics as may be specified for the white_point x and white_point_y syntax elements. For example, the value may be coded in normalized increments of 0.00002, e.g., according to an example color space definition of x and y. src_mdcv_ref_white_x and src_mdcv_ref_white_y may apply to the associated source picture.

src_mdcv_max_mastering_luminance may have the same semantics as may be specified for the max display_mastering luminance syntax element, e.g., except that the value may be coded in units of one (1) candela per square meter. src_mdcv_max_mastering_luminance may apply to the associated source picture. The value of src mdcv_max mastering luminance may be greater than or equal to 125 candela per square meter.

src_mdcv_min_mastering_luminance may have the same semantics as may be specified for the min_dispiay_mastering_luminance syntax element. For example, the value may be coded in units of 0.0001 candelas per square meter. src_mdcv_min_mastering_luminance may apply to the associated source picture.

src_mdcv_max_mastering_luminance and src_mdcv_min_mastering_luminance semantics may be aligned with CTA-861-H [i.1] definitions of max display_mastering luminance and min display_mastering luminance, respectively.

matrix_coefficient_value[ i ] may indicate the value of the i-th coefficient that may be used to compute the $Y'C'_bC'_r$ to R'G'B' conversion matrix in the SL-HDR reconstruction process. The value of matrix_coefficient_value[ i ] may be in the range of, for example, zero (0) to 1023, inclusive.

chroma_to_luma_injection[ i ] may indicate the ratio of the blue and red colour difference components injection into the luma component, e.g., with i set to zero (0) or one (1), respectively. The value of chroma_to_luma_injection[ i ] may be in the range of, for example, zero (0) to 8,191, inclusive.

k_coefficient_value[ i ] may indicate the value of the i-th coefficient that may be used to compute the variable T in the SL-HDR reconstruction process. The value of k_coefficient_value[ 0 ] may be in the range of, for example, zero (0) to 63, inclusive. The value of k_coefficient_value[ 1 ] may be in the range of, for example, zero (0) to 127, inclusive. The value of k_coefficient_value[ 2 ] may be in the range of, for example, zero (0) to 255, inclusive.

tone_mapping_input_signal_black_level_offset may indicate the black level offset that may be subtracted during the SL-HDR reconstruction process. The value of tone mapping input signal_black level offset may be in the range of, for example, zero (0) to 255, inclusive.

tone_mapping_input_signal_white_level_offset may indicate the white level offset that may be used to calculate the gain of the signal as a second process in the luminance mapping curve reconstruction process. The value of tone_mapping_input_signal_white_level_offset may be in the range of, for example, zero (0) to 255, inclusive.

shadow_gain_control may indicate the adjustment to the shadow (darker) region of the luminance mapping curve. The value of shadow_gain_control may be in the range of, for example, zero (0) to 255, inclusive.

highlight_gain control may indicate the adjustment to the highlight (brighter) region of the luminance mapping curve. The value of highlight_gain_control may be in the range of, for example, zero (0) to 255, inclusive.

mid_tone_width_adjustment_factor may indicate the adjustment to the mid-tone region of the tone mapping. The value of mid_tone_width_adjustment_factor may be in the range of, for example, zero (0) to 255, inclusive.

tone_mapping_output_fine_tuning_num_val may indicate the number of pivot points that may be adjusted in the piece-wise linear luminance mapping curve. No adjustment points may be defined, for example, if/when tone_mapping_output_fine_tuning_num_val is equal to zero (0). The value of tone mapping output fine tuning_num val may be in the range of, for example, zero (0) to 10, inclusive.

saturation_gain_num_val may indicate the number of pivot points that may be adjusted in the piece-wise colour correction curve. No adjustment points are defined, for example, if/when saturation_gain_num_val is equal to 0. The value of saturation_gain_num_val may be in the range of, for example, zero (0) to 6, inclusive.

tone_mapping_output_fine_tuning_x[ i ] and tone_mapping_output_fine_tuning_y[ i ] may specify the input and output values of the i-th adjusted pivot point for the luminance mapping curve. The values of tone_mapping_output_fine_tuning_x[ i ] and tone_mapping_output_fine_tuning_y[ i ] may be in the range of, for example, zero (0) to 255, inclusive.

saturation_gain_x[ i ] and saturation_gain_y[ i ] may specify the input and output values of the i-th adjusted pivot point for the colour correction curve. The value of saturation_gain x[ i ] and saturation_gain_y[ i ] may be in the range of, for example, zero (0) to 255, inclusive.

lm_uniform_sampling_flag equal to one (1) may indicate, for example, that the x-coordinates of the pivot points representative of the luminance mapping piece-wise linear curve are distributed (e.g., uniformly) across the horizontal axis. lm_uniform_sampling_flag equal to zero (0) may indicate, for example, that the x-coordinates of the pivot points representative of the luminance mapping piece-wise linear curve are specified by luminance_mapping_x[ i ].

luminance_mapping_num_val may indicate the number of pivot points representative of the luminance mapping piece-wise linear curve. The value of luminance_mapping_num_val may be in the range of, for example, zero (0) to 65, inclusive.

luminance_mapping_x[ i ] may indicate the input value of the i-th pivot point for the luminance mapping piece-wise linear curve. The value of luminance_mapping_x[ i ] may be in the range of, for example, zero (0) to 8 192, inclusive.

luminance_mapping_y[ i ] may indicate the output value of the i-th pivot point for the luminance mapping piece-wise linear curve. The value of luminance_mapping_y[ i ] may be in the range of, for example, zero (0) to 8 191, inclusive.

cc_uniform_sampling_flag equal to one (1) may indicate, for example, that the x-coordinates of the pivot points representative of the colour correction piece-wise linear curve are distributed uniformly across the horizontal axis. cc_uniform_sampling_flag equal to zero (0) may indicate, for example, that the x-coordinates of the pivot points representative of the colour correction piece-wise linear curve are specified by colour_correction_x[ i ].

colour_correction_num_val may indicate the number of pivot points representative of the colour correction piece-wise linear curve. The value of colour_correction_num_val may be in the range of, for example, zero (0) to 65, inclusive.

colour_correction_x[ i ] may indicate the input value of the i-th pivot point for the colour correction curve. The value of colour_correction_x[ i ] may be in the range of, for example, zero (0) to 2 048, inclusive.

colour_correction_y[ i ] may indicate the output value of the i-th pivot point for the colour correction curve. The value of colour_correction_y[ i ] may be in the range of, for example, zero (0) to 2 047, inclusive.

GamutMappingEnabledFlag may be specified in the SL-HDR.

gamut_mapping_mode equal to zero (0) may indicate, for example, that there is no parameter representative of the gamut mapping process (e.g., or its inverse process) carried in the bitstream. gamut_mapping_mode equal to one (1) may indicate, for example, that parameters representative of the gamut mapping process (e.g., or its inverse process) are present in the bitstream. gamut_mapping_mode equal to two (2) and three (3) may indicate, for example, predetermined values that may be used by the inverse gamut mapping process to respectively map a gamut of the reconstructed HDR picture to P3D65 (e.g., preset #1) or to another gamut (e.g., preset #2). The value of gamut_mapping_mode may be in the range of, for example, zero (0) to 3, inclusive. Values of gamut_mapping_mode in the range of, for example, 64 to 127, inclusive may be used to identify particular presets. Values of gamut_mapping_mode in the range of, for example, eight (8) to 63, inclusive and in the range of 128 to 255, inclusive, may be for other uses.

An inverse gamut mapping may be performed after the HDR signal reconstruction process, for example, if/when gamut_mapping_mode is equal to zero (0).

sl_hdr_extension_6bits (e.g., if/when present) may be equal to zero (0) in some bitstreams. Values of sl_hdr_extension_6bits not equal to zero (0) may be for other uses. Some decoders may ignore the value of sl_hdr_extension_6bits.

sl_hdr_extension_length may indicate the length of the SL-HDR extension data in bytes, e.g., not including the bits that may be used for signaling sl_hdr extension length itself. The value of sl_hdr extension length may be in the range of, for example, zero (0) to 1023, inclusive. The value of sl_hdr extension length may be inferred, e.g., to be equal to zero (0), for example, if/when sl_hdr _extension_length is not present.

sl_hdr_extension_data_byte[ i ] may have any value. Some decoders may ignore the value of sl_hdr_extension_data_byte[ i ].

A colour transform information (CTI) SEI message may provide information to enable remapping of the reconstructed colour samples of the output pictures for one or more purposes, such as converting the output pictures to a representation that may be more suitable for an alternative display. The colour transform model used in a CTI SEI message may be composed of, for example, a first piece-wise linear function applied to the first colour component. Additional (e.g., one or two additional) piece-wise linear functions may be signaled for other colour components (e.g., the second and third colour components), for example, depending on the values of syntax elements colour_transform_cross_component_flag, colour_transform_cross_comp_inferred_flag, and colour transform lut2_present flag.

An example of the syntax of a colour transform information (CTI) SEI message is provided in Table 7.

Table 7 - Example of the syntax of a colour transform information (CTI) SEI message

| colour_transform_info( payloadSize ) { | Descriptor |
|---|---|
| **colour_transform_id** | ue(v) |
| **colour_transform_cancel_flag** | u(1) |
| if( !colour_transform_cancel_flag ) { | |
| **colour_transform_persistence_flag** | u(1) |
| **colour_transform_video_siqnal_info_present_flag** | u(1) |
| if( colour_transform_video_siqnal_info_present_flag ) { | |
| **colour_transform_full_range_flag** | u(1) |
| **colour_tranform_primaries** | u(8) |
| **colour_transform_transfer_function** | u(8) |
| **colour_transform_matrix_coefficients** | u(8) |
| } | |
| **colour_transform_bit_depth_minus8** | u(4) |
| **colour_transform_lop2_number_of_points_per_lut_minus1** | u(3) |
| **colour_transform_cross_component_flag** | u(1) |
| if( colour_transform_cross_component_flag ) | |
| **colour_transform_cross_comp_inferred_flag** | u(1) |
| for( i = 0; i < colourTransformSize; i++) | |
| **colour_trans_lut**[ 0 ][ i ] | u(v) |
| if( colour_transform_cross_component_flag = = 0 ‖<br>      colour_transform_cross_comp_inferred_flag = = 0 ) { | |
| **colour_transform_lut2_present_flag** | u(1) |
| for( i = 0; i < colourTransformSize; i++) | |
| **colour_transf_lut**[ 1 ][ i ] | u(v) |
| if( colour_transform_lut2_present_flag ) | |
| for( i = 0; i < colourTransformSize; i++) | |
| **colour_transf_lut**[ 2 ][ i ] | u(v) |
| } else | |
| **colour_transform_chroma_offset** | u(v) |
| } | |
| } | |

Tone mapping metadata selection provides methods to select at least one metadata among several metadata related to the transformation of a content (e.g., in terms of color, brightness, contrast, luminance, bit depth, etc.) to be applied to the content.

In some examples, similar yet different, or conflicting metadata and corresponding messages may exist that relate to the transformation of a content (e.g., in terms of colors, tone, luminance, brightness, contrast, bit depth). The metadata may serve different purposes, such as tone mapping operations or energy reduction, for example.

A device in charge of applying metadata may not be able to (e.g., blindly) apply multiple metadata on the content, e.g., because one or more conflicts may occur between the different processings, which may result in (e.g., noticeable) alterations of the output picture that may (e.g., strongly) degrade the visual quality of the rendered picture.

One or more methods are described herein to choose between one or more metadata from among multiple metadata to apply to content, e.g., including in which order the metadata may be applied if/when more than one metadata are chosen.

Post-processings may be grouped, for example, at least among post-processings that may be defined through SEI messages. The groups may (e.g., then) be used for cascading processings or defining alternatives of processings. Some examples of grouping post-processings are described herein.

An SEI processing order (SPO) SEI message may carry information indicating a (e.g., preferred) processing order for a group of types of SEI messages that may be present in a coded video sequence (CVS). The processing order may be determined by the encoder (e.g., the content producer). The semantics of the SPO SEI message may use the concept of types of SEI messages. For example, SEI messages that have different payloadType values may be considered to be different types of SEI messages. Different SEI messages that have the same payloadType value, but that may be differentiated by values of syntax elements in the SEI payload, may be considered different types of SEI messages.

A processing chain may include a list of types of SEI messages that may be identified by an SPO SEI message in the preferred processing order indicated in the SPO SEI message.

An SPO SEI message may allow a definition of an order of processing SEI messages. The SPO SEI message may not discard an SEI message in favor of another SEI message. The SPO SEI message may apply (e.g., only) to SEI messages. SPO SEI messages may not apply, for example, if external metadata and their corresponding messages conflict with an SEI message.

A processing order nesting (PON) SEI message may include one or more SEI messages that may be applied (e.g., only) as parts of the processing chain that may be identified by an associated SPO SEI message. The PON SEI message with one or more SEI messages may not be applied in a manner that would contradict with the processing chain identified by the associated SPO SEI message.

PON SEI messages may be used in complement to the SPO SEI messages (e.g., therefore, a PON SEI message may share limitations of an SPO SEI message).

A neural-network post-filter group characteristics (NNPFGC) SEI message may indicate a neural network post-filter (NNPF) group. The NNPFGC SEI message may define for example an NNPF cascade, e.g., NNPFs that are to be applied on after another. The NNPFGC SEI message may also define NNPFs or NNPF groups of NNPF cascades that may be alternatives to each other. The use of NNPF groups of NNPF cascades for one or more (e.g., specific) pictures may be indicated, for example, with neural-network post-filter group activation (NNPFGA) SEI messages. An NNPF group may have members that are NNPF or NNPF group.

An example of the syntax for an NNPFGC SEI message is provided in Table 8.

Table 8 - example of the syntax for an NNPFGC SEI message

| nn_post_filter_group_characteristics( payloadSize ) { | Descriptor |
|---|---|
| **nnpfgc_id** | ue(v) |
| **nnpfgc_grouping_type** | ue(v) |
| if( nnpfgc_grouping_type = = 0 ‖ nnpfgc_grouping_type = = 2 ) | |
| **nnpfgc_purpose** | u(16) |
| **nnpfgc_num_members_minus2** | ue(v) |
| for( i = 0; i <= nnpfgc_num_members_minus2 + 1; i++) { | |
| **nnpfgc_member_id**[ i ] | ue(v) |
| if( nnpfgc_grouping_type = = 1 ‖ nnpfgc_grouping_type = = 3 ) | |
| **nnpfgc_member_purpose**[ i ] | u(16) |

(continued)

| | |
|---|---|
| } | |
| **nnpfgc_complexity_info_present_flag** | u(1) |
| if( nnpfgc_complexity_info_present_flag ) { | |
| **nnpfgc_parameter_type_idc** | u(2) |
| if( nnpfgc_parameter _type_idc != 2) | |
| **nnpfgc_log2_parameter_bit_length_minus3** | u(2) |
| **nnpfgc_num_parameters_idc** | u(6) |
| **nnpfgc_num_kmac_operations_idc** | ue(v) |
| **nnpfgc_total_kilobyte_size** | ue(v) |
| } | |
| } | |

nnpfgc_grouping_type equal to zero (0) may indicate, for example, that the SEI message may indicate a group of cascaded neural-network post-filters.

nnpfgc_grouping_type equal to one (1) may indicate, for example, that the NNPFs or NNPF groups identified by the nnpfgc_member_id[ i ] are alternatives to each other, for example, out of which the post-processor may select (e.g., only one) to be applied.

nnpfgc_grouping_type equal to two (2) may indicate, for example, that the SEI message may indicate a group of NNPFs that may be (e.g., intended to be) used jointly. The NNPFs may be activated in an alternating manner, for example, so that at most one of the NNPFs may be activated for a (e.g., any) picture.

nnpfgc_grouping_type equal to three (3) may indicate, for example, that the NNPFs or NNPF groups identified by the nnpfgc_member_id[ i ] may be (e.g., intended to be) used in parallel.

nnpfgc_grouping type equal to four (4) may indicate that the NNPFs or NNPF groups identified by the nnpfgc_member_id[ i ] may be optional, e.g., may or may not be applied by the post-processor.

NNPFGC SEI messages may provide a way to group and cascade multiple (e.g., several) NNPFs together and/or to define multiple (e.g., alternative) processings. NNPFGC SEI messages may be general, for example, without defining what is to be done in the (e.g., specific) case of Tone Mapping related operations, e.g., especially when the tone mapping related operations may not be described and carried with SEI messages.

NNPF groups may be extended to a (e.g., any) post-processing filter (PPF), deriving PPF groups.

A post-processing filter may be indicated by an SEI message for which the payloadType value may be in SeiProcessingOrderSeiList, which may be specified in the semantics of the SEI processing order (SPO) SEI message.

For a (e.g., each) picture, there may be multiple PPFs activated that may belong to one or more PPF groups. PPF groups may be alternative to each other, e.g., at most one group may be chosen to be applied.

A specific order or selection process may not be specified for Tone Mapping related operations, e.g., especially when the operations may not be described and carried with SEI messages.

Similar yet different, or conflicting metadata and corresponding messages may exist in the bitstream that relate to the transformation of a content (e.g., in terms of colors, tone, luminance, brightness, contrast, bit depth). This type of transformation is referred to (e.g., generally) as "tone mapping"), for example, to simplify the notations. The metadata may serve different purposes, such as tone mapping operations or energy reduction, for example.

An end device in charge of applying the metadata may not (e.g., blindly) apply all of the metadata on the content, for example, because one or more (e.g., some) conflicts may occur between the different processings, which could result in (e.g., noticeable) alterations of the output picture that may (e.g., strongly) degrade the visual quality of the output picture.

Selection of tone mapping metadata may avoid degradation of picture quality, for example, by choosing metadata among multiple metadata to apply, and in which order, e.g., if/when more than one metadata are chosen. Selection of tone mapping metadata may be applied, for example, when there is an NNPF SEI message with a tone mapping purpose and there are one or more other tone mapping SEI messages or metadata also present in the bitstream.

Several examples are described herein.

In some examples, (e.g., only) one NNPFC SEI for Tone Mapping may be kept and applied.

In some examples, a (e.g., one) NNPFC SEI for Tone Mapping and a (e.g., another) Tone Mapping metadata may be kept and applied.

In some examples, when a (e.g., one) NNPFC SEI for Tone Mapping and a (e.g., another) Tone Mapping metadata may be kept and applied, and when one of the two metadata relates to content adaptation for energy control (energy-related metadata), the energy-related metadata must be applied first in the post-processing chain, and the second metadata must be applied after the energy-related metadata.

In some examples, the NNPFC SEI for Tone Mapping may be discarded.

In some examples, the NNPFC SEI for Tone Mapping may (e.g., already) be applied but may be discarded, for example, to the benefit of another metadata for tone mapping operations.

In some examples, the NNPFC SEI may include the purpose for Tone Mapping and other conflicting purposes, and it may be decided to keep only the tone mapping purpose.

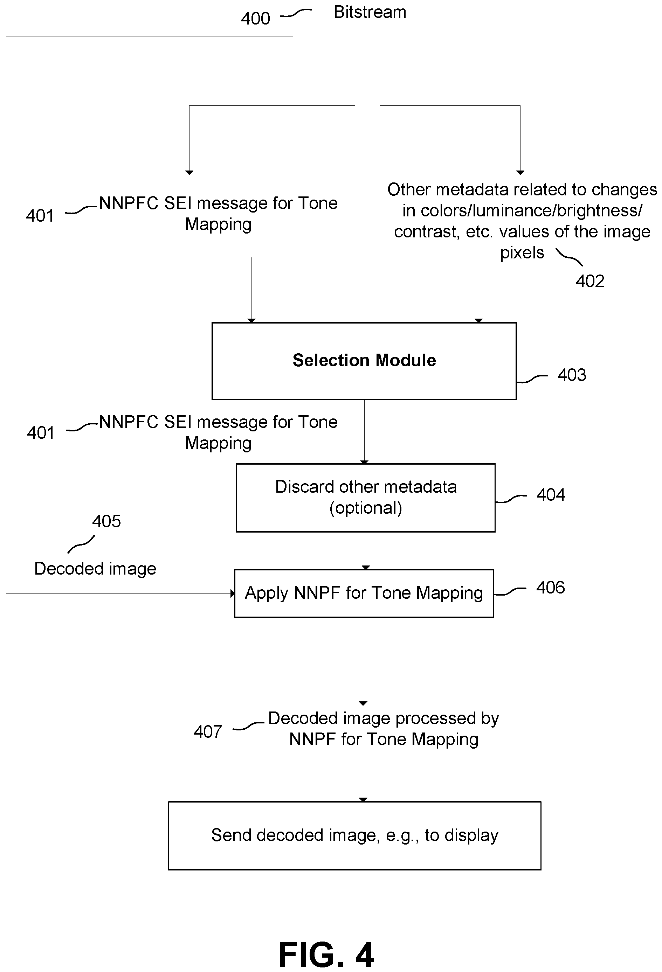

In some examples, the NNPFC SEI may include the purpose for Tone Mapping and other conflicting purposes, and it may be decided to discard the Tone Mapping purpose, or to apply it together with (e.g., before) another purpose)In some examples, (e.g., only) the NNPFC SEI for Tone Mapping may be kept and applied, e.g., as shown by example in FIG. 4. As shown in FIG. 4, (e.g., all) metadata related to changes in color, luminance, brightness, contrast, bitdepth, etc. (e.g., any change that (directly) affects the image pixel values) may be retrieved from the bitstream 400, e.g., as potentially conflicting metadata (e.g., as indicated at 401 and 402). Among the metadata, an NNPFC SEI message with Tone Mapping purpose may exist (e.g., as indicated at 401). At 403, a selection module may apply a selection among (e.g., all) the metadata, for example, by keeping (e.g., only) the NNPFC SEI message that may be related to Tone Mapping operations. At (e.g., optional) 404, (e.g., all) other metadata potentially conflicting with the SEI message may be discarded. At 406, the Tone Mapping operations (e.g., as described in the NNPFC SEI message) may be applied on the decoded picture 405. The resulting decoded post processed picture 407 may (e.g., then) be sent for use, e.g., for further processing or display.

In some examples, multiple (e.g., several) NNPFC SEI messages with a Tone Mapping purpose may be present in the bitstream. The selection module (403) may select a (e.g., one/single) NNPFC SEI message, e.g., from among multiple NNPFC SEI messages with a Tone Mapping purpose., The selection module (403) may exploit external information (e.g., the brightness supported by the display, or the energy reduction level requested by the end-user) to make a selection, for example, if/when each of multiple NNPFC SEI messages with a Tone Mapping purpose corresponds to a purpose (e.g., a target brightness or energy reduction). For example, the selected NNPFC SEI message with Tone Mapping purpose may be a message indicating the target brightness is the closest brightness below the display peak brightness.

In some examples, (e.g., only) the NNPFC SEI for Tone Mapping may be kept and applied, for example, if/when the other metadata may be other NNPFC SEI metadata with other potentially conflicting purposes.

FIG. 4 illustrates an example of keeping and applying an NNPFC SEI for Tone Mapping.

As shown in FIG. 4, for example, if/when a bitstream includes an NNPFC SEI message with purpose corresponding to Tone Mapping and other metadata related to Tone Mapping operations or an (e.g., any) operation modifying the brightness, contrast, luminance, colours, and/or bit depth of an image, (e.g., only) one of the operations may be selected for consideration, e.g., by selection module 403.

For example, an operation based on an NNPFC SEI message may be considered while other Tone Mapping operations may be discarded, e.g., by selection module 403.

For example, (e.g., only) one of multiple (e.g., several) operations based on NNPFC SEI messages may be selected, e.g., by selection module 403.

Metadata may be removed from the bitstream. In some examples, alternate metadata related to tone mapping that may conflict with NNPF metadata related to tone mapping may be discarded and/or removed from the bitstream. Discarding/removal may occur, for example, if/when the bitstream is processed before redistribution (e.g., in case of bitstream concatenation (or splicing), transrating, transcoding).

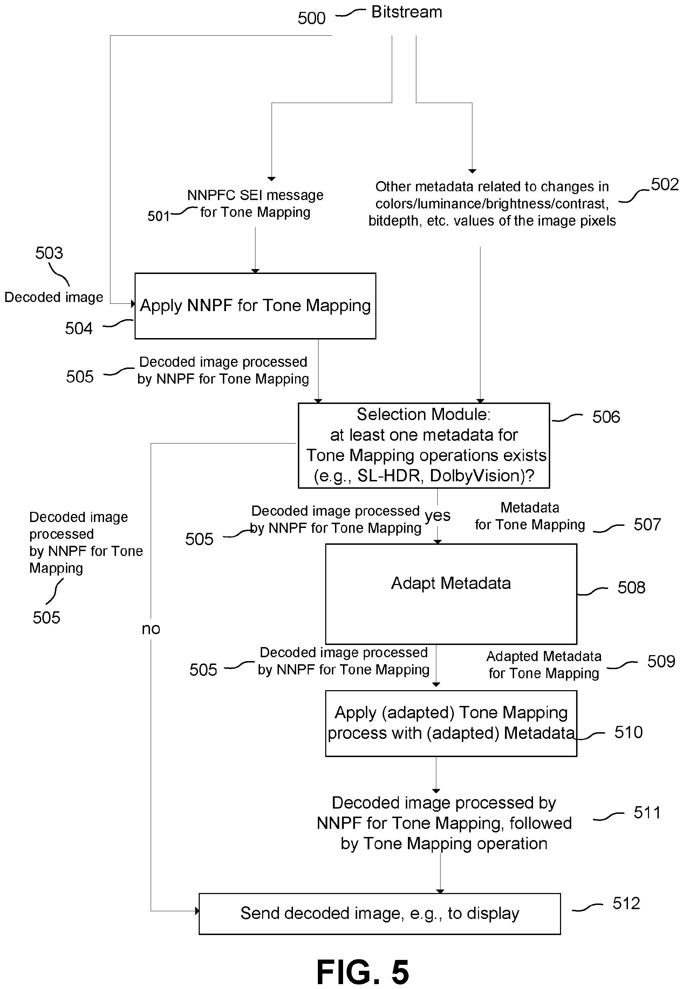

In some examples, the NNPFC SEI for Tone Mapping and another Tone Mapping metadata may be kept and applied. An example is shown in FIG. 5. As shown in FIG. 5, at 501 and 502, an NNPFC SEI message for Tone Mapping operations and other related metadata for similar and/or conflicting operations may be retrieved from the bitstream. At 504, the Tone Mapping operation described in the NNPFC SEI message may (e.g., first) be applied on the decoded picture 503. At 506, a selection module may check/determine whether one or more (e.g., some) metadata in the metadata retrieved in 502 also correspond to other (e.g., second) Tone Mapping operations. At 508 (e.g., if at least one set of metadata related to one similar Tone Mapping operation as in the NNPFC SEI message is found), the metadata may be (e.g., optionally) adapted to take the NNPF Tone Mapping operation into account, for example, before applying the related (e.g., second) Tone Mapping operation on the decoded picture 505, at 510. At 512, the decoded image may be sent to the output e.g., for display.

In examples, when the NNPFC SEI for Tone Mapping contains an indication of the energy impact at the display side of the application of the NNPFC SEI, this NNPFC SEI must be applied first. For example, when one of the two metadata (e.g. NNPFC SEI message for Tone Mapping and another) Tone Mapping metadata) relates to content adaptation for energy control (energy-related metadata), the energy-related metadata must be applied first in the post-processing chain, and the second metadata must be applied after the energy-related metadata. Keeping and applying the NNPFC SEI for Tone Mapping and another Tone Mapping metadata may (e.g., also) apply, for example, if/when the other metadata are other NNPFC SEI metadata with other potentially conflicting purposes.

FIG. 5 illustrates an example of keeping and applying the NNPFC SEI for Tone Mapping and another metadata.

In some examples, the roles of the NNPF for tone mapping, and of the alternate metadata for tone mapping, may be inversed. That is, the operation at 504 may relate to non-NNPF alternate metadata for tone mapping while the operations at 506, 508, 510 may relate to the NNPF for tone mapping. For example, 501 and 502 may be reversed.

An example scenario may be as follows. The decoded video may be in HDR format with a given peak brightness. The end-user may request/ask for (e.g., a specific) energy reduction, e.g., based on the application of the NNPF SEI message for Tone Mapping, for example, with the purpose of energy reduction to the decoded video. The decoded video may be processed by the NNPF SEI message to obtain an attenuated video (e.g., to generate less energy consumption from the display), which may give the output video 1. The actual display may be SDR. The output video 1 may be processed by SL-HDR metadata that has metadata for converting HDR to SDR.

Another example scenario may be as follows. The decoded video may be in HDR format with a given peak brightness. The end-user may request/ask for (e.g., a specific) energy reduction, e.g., based on the application of the NNPF SEI message for Tone Mapping, for example, with the purpose of energy reduction to the decoded video. The decoded video may be processed by the NNPF SEI message to obtain an attenuated video (e.g., to generate less energy consumption from the display), which may give the output video 1. The actual display may have a lower peak brightness than the native video. The output video 1 may be processed by SL-HDR metadata that may have a target brightness value below the peak brightness of the display.

In the example scenarios (e.g., as explained herein), the role and/or the order of application of the NNPF-based tone mapping and of the SL-HDR-based tone mapping may be inversed.

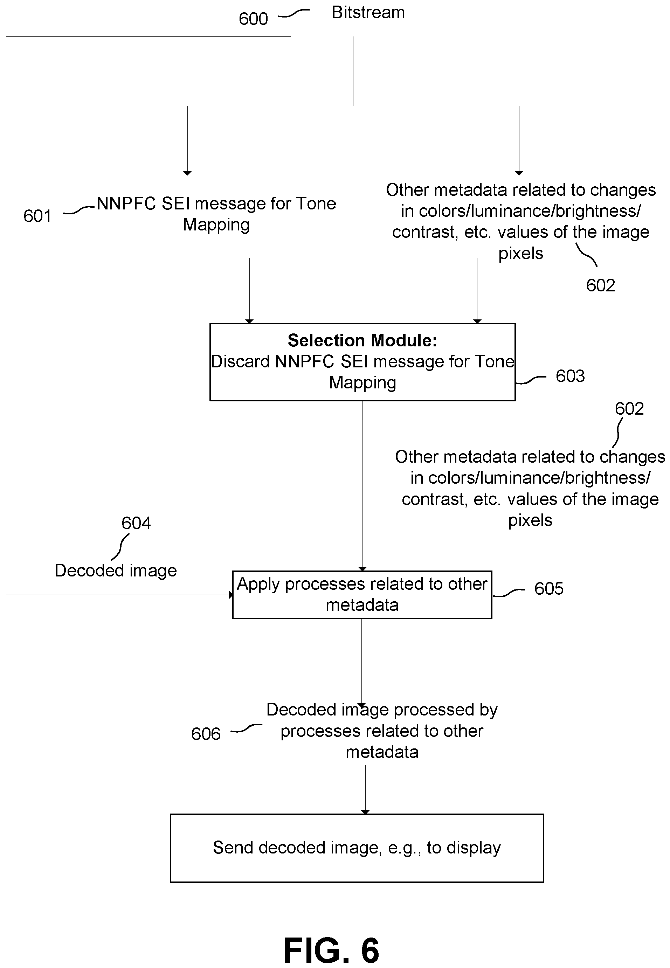

In some examples, the NNPFC SEI for Tone Mapping may be discarded, as shown by example in FIG. 6. As shown in FIG. 6, (e.g., all) metadata (e.g., shown at 601 and 602) related to changes in color, luminance, brightness, contrast, bitdepth, etc. (e.g., any change that may (directly) affect the image pixel values) may be retrieved from the bit stream, e.g., as potentially conflicting metadata. Among the metadata, one or more NNPFC SEI messages with a Tone Mapping purpose may exist (e.g., as shown at 601). At 603, a selection module may apply a selection among (e.g., all) the metadata, for example, by discarding the NNPFC SEI messages that may be related to Tone Mapping operations. At 605, the Tone Mapping operations as described in the other metadata (e.g., as shown at 602) may be applied on the decoded picture 604. The resulting decoded post processed picture 608 may (e.g., then) be sent for use, e.g., for further processing or display.

Discarding of the NNPFC SEI for Tone Mapping may (e.g., also) may apply, for example, if/when the other metadata may be other NNPFC SEI metadata with other potentially conflicting purposes.

FIG. 6 illustrates an example of discarding the NNPFC SEI for Tone Mapping.

As shown in FIG. 6, for example, if/when a bitstream includes an NNPFC SEI message with a purpose corresponding to Tone Mapping together with other metadata related to Tone Mapping operations or an (e.g., any) operation modifying the brightness, contrast, luminance, colours, or bit depth of an image, (e.g., only) one of the operations may be considered.

For example, an operation based on an NNPFC SEI message for Tone Mapping may be discarded.

Similar conflicts may exist between other NNPFC SEI messages, for example, for the purpose(s) of Colourization, Bit Depth Upsampling, and/or General Quality Improvements. The example shown in FIG. 6 may be modified, for example, by replacing the NNPFC for Tone Mapping by the other NNPFC SEI message. In some examples (e.g., as a result of the modification of the example shown in FIG. 6), an operation based on an NNPFC SEI message for Colourization, General Quality Improvement, Bit depth upsampling, or Tone Mapping may be discarded.

In some (e.g., alternative) examples, an operation based on an NNPFC SEI message modifying the color, luminance, brightness, contrast, or bit depth of the input image pixel values may be discarded.

In some examples, the NNPFC SEI for Tone Mapping may not be considered, e.g., even though, the NNPFC SEI for Tone Mapping may have already been applied. In some examples (e.g., similar to one or more previous examples described herein), the NNPFC SEI message for Tone Mapping may be discarded, e.g., even though, the NNPFC SEI message for Tone Mapping was already applied. The decoded image before application of the NNPFC SEI message for Tone Mapping may be buffered and recovered, for example, to replace the version of the decoded image after application of the NNPFC SEI message for Tone Mapping. Operations at 605 and after, e.g., as shown in FIG. 6, may (e.g., then) be applied.

In some examples (e.g., similar to one or more examples described herein), the other metadata related to Tone Mapping operations may be discarded, for example, even though the other metadata related to Tone Mapping operations were already applied. The decoded image before application of the metadata may be buffered and recovered, for example, to replace the version of the decoded image after application of the metadata. Operations at 606 and after, e.g., as shown in FIG. 4 may (e.g., then) be applied.

In some examples, a NNPFC SEI message may be decoded in the bitstream. The NNPFC SEI message may include a purpose for Tone Mapping and other potentially conflicting purposes. Examples described herein may be applied, for example, if an NNPFC SEI message includes multiple (e.g., two) purposes, e.g., the Tone Mapping purpose and another purpose that may potentially conflict with the Tone Mapping purpose. For example, the Tone Mapping purpose may be dropped, (e.g., only) the Tone Mapping purpose may be kept and applied, or both may be kept and applied (e.g., one after the other).

In some examples, e.g., if/when ChromaFormatIdc is equal to three (3), ChromaUpsamplingFlag may be equal to zero (0).

In some examples, e.g., if/when ChromaUpsamplingFlag is equal to one (1), ColourizationFlag may be equal to zero (0).

In some examples, e.g., if/when ToneMappingFlag is equal to one (1), the flag in the nnpfc_purpose for General Quality Improvement may be equal to zero (0).

In some examples, e.g., if/when ToneMappingFlag is equal to one (1), ColourizationFlag may be equal to zero (0).

In some examples, e.g., if/when ToneMappingFlag is equal to one (1), BitDepthUpsamplingFlag may be equal to zero (0).

In some examples, the purpose for Tone Mapping may be discarded and the other purpose may be kept.

In some examples, e.g., if/when the flag in the nnpfc_purpose for General Quality Improvement is equal to one (1), ToneMappingFlag may be equal to zero (0).

In some examples, e.g., if/when ColourizationFlag is equal to one (1), ToneMappingFlag may be equal to zero (0).

In some examples, e.g., if/when BitDepthUpsamplingFlag is equal to one (1), ToneMappingFlag may be equal to zero (0).

Selection of tone mapping metadata may address video coding/decoding, distribution, energy consumption, and/or tone mapping operations.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

   i. Encoding, into coded video data, syntax elements that can enable the decoder to decode the coded video data, according to any of the embodiments described herein.

   ii. Video data (e.g., a bitstream) that may include one or more of the described syntax elements, or variations thereof, whether transmitted, stored, or otherwise made available.

   iii. Creating, transmitting, receiving, and/or decoding of the bitstream.

   iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first," "second," etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, which can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

   i. session description protocol (SDP), for example as described in RFCs and/or used in conjunction with real-time transport protocol (RTP) transmission.

   ii. hypertext transfer protocol (HTTP) live Streaming (HLS) manifest transmitted over HTTP.

   iii. dynamic adaptive streaming over HTTP (DASH) media presentation description (MPD) descriptors, for example as used in DASH and transmitted over HTTP.

   iv. RTP header extensions, for example as used during RTP streaming.

   v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal," the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/," "and/or," and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1. A video decoder device, the video decoder device comprising:
   a processor configured to:

   receive a bitstream;
   determine a first metadata from the bitstream, wherein the first metadata indicates a first change to one or more image pixel values from the bitstream;
   determine a second metadata from the bitstream, wherein the second metadata indicates a second change to the one or more image pixel values, and indicates neural network post filter characteristics (NNPFC);
   select the second change based on the indication of the NNPFC if it is determined that the first change conflicts with the second change; and
   decode an image by applying the selected second change to the one or more image pixel values.

2. The video decoder device of claim 1, wherein the first metadata is associated with a first supplemental enhanced information (SEI) message, wherein the second metadata is associated with a second SEI message, and wherein the first change to the one or more image pixel values comprises a change to at least one of a brightness, a contract, a luminance, a colour, or a bit depth.

3. The video decoder device of any one of claims 1 to 2, wherein the second change to the one or more image pixel values comprises a change associated with tone mapping.

4. The video decoder device of any one of claims 1 to 3, wherein the NNPFC is a first NNPFC, and wherein the processor is configured to decode the image by applying the selected second change comprises the processor being configured to:

   adjust the first change to account for the selected second change
   determine a third change, wherein the third change is associated with the adjustment to the first change; and
   decode the image by applying the selected second change and the third change to the one or more image pixel values.

5. The video decoder device of any one of claims 1 to 4, wherein the NNPFC is a first NNPFC, and wherein the first metadata further indicates an adjustment to the first change and indicates a second NNPFC.

6. The video decoder device of any one of claims 1 to 3, wherein the processor is further configured to:
   discard the first metadata if it is determined that the first change conflicts with the second change.

7. The video decoder device of any one of claims 1 to 3, wherein the processor is further configured to:

   remove the selected second changes from the decoded image if the first change conflicts with the second change; and
   decode the image by applying the first change to the one or more image pixel values.

8. The video decoder device of any one of claims 1 to 7, wherein the processor is further configured to send the decoded image to a display.

9. A video encoder device, the video encoder device comprising:
   a processor configured to:

   receive an image;
   determine a first metadata for a bitstream, wherein the first metadata indicates a first change to one or more image pixel values of the image;
determine a second metadata for the bitstream, wherein the second metadata indicates a second change to the one or more image pixel values, and indicates neural network post filter characteristics (NNPFC);
select the second change based on the indication of the NNPFC if it is determined that the first change conflicts with the second change; and
encode the bitstream using the first metadata and the second metadata .

10. The video encoder device of claim 9, wherein the first metadata further indicates a supplemental enhanced information (SEI) message, wherein the second metadata further indicates a second SEI message, and wherein the first change to the one or more image pixel values comprises a change to at least one of a brightness, a contract, a luminance, a colour, or a bit depth.

11. The video encoder device of any one of claims 9 to 10, wherein the second change to the one or more image pixel values comprises a change associated with tone mapping.

12. The video encoder device of any one of claims 9 to 11, wherein the NNPFC is a first NNPFC, and wherein the processor is configured to encode the bitstream using the first metadata and the second metadata comprises the processor being configured to:

determine an adjustment to the first change to account for the selected second change;
determine a third metadata by modifying first metadata to account for the adjustment to the first change; and
encode the bitstream by including the second metadata and the third metadata.

13. The video encoder device of any one of claims 9 to 12, wherein the processor is further configured to encode the bitstream using the first metadata and the second metadata:

discard the first metadata if it is determined that the first change conflicts with the second change; and.
encode the bitstream by including the second metadata.

**FIG. 1**

FIG. 2

FIG. 3

400 〜 Bitstream

401 〜 NNPFC SEI message for Tone Mapping

Other metadata related to changes in colors/luminance/brightness/contrast, etc. values of the image pixels 〜 402

**Selection Module** 〜 403

401 〜 NNPFC SEI message for Tone Mapping

Discard other metadata (optional) 〜 404

405

Decoded image

Apply NNPF for Tone Mapping 〜 406

407 〜 Decoded image processed by NNPF for Tone Mapping

Send decoded image, e.g., to display

# FIG. 4

500 ⌒ Bitstream

NNPFC SEI message
501 ⌒ for Tone Mapping

Other metadata related to changes in
colors/luminance/brightness/contrast,
bitdepth, etc. values of the image pixels ⌒502

503

Decoded image

Apply NNPF for Tone Mapping

504 ⌒

505 ⌒ Decoded image processed
by NNPF for Tone Mapping

Selection Module:
at least one metadata for
Tone Mapping operations exists
(e.g., SL-HDR, DolbyVision)? ⌒ 506

Decoded image
processed
by NNPF for Tone
Mapping

505

Decoded image processed yes
505 ⌒ by NNPF for Tone Mapping

Metadata
for Tone Mapping ⌒ 507

Adapt Metadata ⌒ 508

no

505 ⌒ Decoded image processed
by NNPF for Tone Mapping

Adapted Metadata
for Tone Mapping ⌒ 509

Apply (adapted) Tone Mapping
process with (adapted) Metadata ⌒ 510

Decoded image processed by
NNPF for Tone Mapping, followed
by Tone Mapping operation ⌒ 511

Send decoded image, e.g., to display ⌒ 512

FIG. 5

600 ⁓ Bitstream

601 ⁓ NNPFC SEI message for Tone Mapping

Other metadata related to changes in colors/luminance/brightness/contrast, etc. values of the image pixels

602

**Selection Module:**
Discard NNPFC SEI message for Tone Mapping

603

602

Other metadata related to changes in colors/luminance/brightness/contrast, etc. values of the image pixels

604

Decoded image

Apply processes related to other metadata

605

Decoded image processed by processes related to other metadata

606 ⁓

Send decoded image, e.g., to display

# FIG. 6

Europäisches
Patentamt

European
Patent Office

Office européen
des brevets

# EUROPEAN SEARCH REPORT

**Application Number**

EP 24 30 6767

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Y-K WANG (BYTEDANCE) ET AL: "BoG report on NNPF and SEI processing order SEI messages", 30. JVET MEETING; 20230421 - 20230428; ANTALYA; (THE JOINT VIDEO EXPLORATION TEAM OF ISO/IEC JTC1/SC29/WG11 AND ITU-T SG.16 ), , no. JVET-AD0362 ; m63449 24 April 2023 (2023-04-24), XP030309238, Retrieved from the Internet: URL:https://jvet-experts.org/doc_end_user/documents/30_Antalya/wg11/JVET-AD0362-v4.zip JVET-AD0362-v4.docx [retrieved on 2023-04-24] | 1,2, 4-10,12, 13 | INV. H04N19/117 H04N19/46 H04N19/70 H04N19/82 H04N19/85 |
| Y | * page 3 - page 4 * * page 6 - page 7 * ----- | 3,11 | |
| A | MCCARTHY S ET AL: "Improvements under consideration for neural network post filter SEI messages", 29. JVET MEETING; 20230111 - 20230120; TELECONFERENCE; (THE JOINT VIDEO EXPLORATION TEAM OF ISO/IEC JTC1/SC29/WG11 AND ITU-T SG.16 ), , no. JVET-AC2032 ; m62445 1 February 2023 (2023-02-01), XP030307120, Retrieved from the Internet: URL:https://jvet-experts.org/doc_end_user/documents/29_Teleconference/wg11/JVET-AC2032-v2.zip JVET-AC2032-v2.docx [retrieved on 2023-02-01] * abstract * * table 20 * ----- -/-- | 1-13 | **TECHNICAL FIELDS SEARCHED (IPC)** H04N |

The present search report has been drawn up for all claims

| Place of search | Date of completion of the search | Examiner |
|---|---|---|
| The Hague | 11 March 2025 | Wedi, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................................

& : member of the same patent family, corresponding document

EPO FORM 1503 03.82 (P04C01)

page 1 of 2

| | Europäisches Patentamt |
|---|---|
| | European Patent Office |
| | Office européen des brevets |

# EUROPEAN SEARCH REPORT

**Application Number**

EP 24 30 6767

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | C-H DEMARTY (INTERDIGITAL) ET AL: "[AHG9]: Neural network post-filter for tone mapping operations", 147. MPEG MEETING; 20240715 - 20240719; SAPPORO; (MOTION PICTURE EXPERT GROUP OR ISO/IEC JTC1/SC29/WG11), , no. m68378 12 July 2024 (2024-07-12), XP030321369, Retrieved from the Internet: URL:https://dms.mpeg.expert/doc_end_user/documents/147_Sapporo/wg11/m68378-JVET-AI0062-v5-JVET-AI0062-v5.zip JVET-AI0062-v5.docx [retrieved on 2024-07-12] | 3,11 | |
| A | * abstract * * table 1 * | 1,2, 4-10,12, 13 | |
| | ----- | | |
| | | | TECHNICAL FIELDS SEARCHED (IPC) |

The present search report has been drawn up for all claims

| Place of search | Date of completion of the search | Examiner |
|---|---|---|
| The Hague | 11 March 2025 | Wedi, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................
& : member of the same patent family, corresponding document

EPO FORM 1503 03.82 (P04C01)